# EUROPÄISCHE PATENTANMELDUNG

(11) **EP 1 037 476 A1**
(43) Veröffentlichungstag der Anmeldung: **20.09.2000**
(21) Anmeldenummer: 99440055.4
(22) Anmeldetag: 17.03.1999
(51) Int. Cl.: H04Q 3/62, H04M 3/42, H04M 7/00

(54) **In einem Rechner integrierte Nebenstellenanlage**

(71) Anmelder: ALCATEL, 75008 Paris (FR)
(72) Erfinder: Pleger, Nicolas, 67000 Strasbourg (FR); Penet, Xavier, 67400 Ilkirch Grafenstaden (FR)
(74) Vertreter: Knecht, Ulrich Karl, Dipl.-Ing.

(57) **Zusammenfassung**

Eine Nebenstellenanlage (1) ist in einem Rechner (2) integriert, wobei die Nebenstellenanlage mindestens eine auf die Bearbeitung von Telekommunikationsanwendungen ausgerichtete Karte (3-6), die Sprach- und Datensignale verarbeitet, eine digitale Schnittstelle (7) zu einer zentralen Verwaltungseinheit (8) des Rechners und Ausgänge (21-24) zu den Teilnehmerendgeräte einer zu bedienenden Telekommunikationsanlage beinhaltet. Die Nebenstellenanlage weist gegebenfalls ein Erweiterungsmodul (30) auf, das mehrere Steckplätzen für Karten und eine Schnittstelle (7) zum Rechner enthält, die mit den Steckplätzen derart verbunden ist, daß eine Kommunikation zwischen den Karten und dem Rechner erfolgen kann.

## Beschreibung

Die Erfindung befaßt sich mit einer in einem Rechner integrierten Nebenstellenanlage zur zentralen Verwaltung der Telekommunikationsverbindungen von Teilnehmerendgeräten einer zu bedienenden Telekommunikationsanlage.

In der DE 85 35 34 918 ist eine Nebenstellenanlage offenbart, die einen Rechner als zentrale Steuereinrichtung zur wahlweisen Verbindung von Amts- mit Teilnehmerleitungen aufweist. Die Nebenstellenanlage ist in einer Einschubkarte eingebaut, die in den Rechner eingeführt wird. Sie weist zwei Anschlüsse für Amtsleitungen und zwei digitale Teilnehmeranschlüsse auf. Über eine digitale Zeitschlitzkopplung ist sie mit dem Rechner verbunden. Zu dieser Zeitschlitzkopplung werden Anreize von den Amts- und Teilnehmerleitungen geleitet, wobei die Auswertung von dem Rechner übernommen wird. Die Einschubkarte enthält eine digitale Sprachverarbeitung. In Anpassung daran wird sie neben einem Tongenerator auch noch mit einer Taktversorgung (Puls Code Modulation), einer digitalen Zeitschlitzkopplung, einer digitalen Teilnehmerbaugruppe und einer Amtsbaugruppe mit Analog/Digital-Wandlung ausgerüstet.

Eine solche Nebenstellenanlage weist nur eine sehr geringe Anzahl von Hauptanschlüsse als Amtsleitungen und Teilnehmerleitungen für digitale Teilnehmeranschlüsse auf. Deshalb kann diese Nebenstellenanlage, die eine zentrale Einheit eines Personal-Computers verwendet, nur für eine sehr kleine Anzahl von Teilnehmeranschlüssen verwendet werden. Zu dem ist sie nur für konventionnelle Vermittlungsaufgaben verwendbar, und kann nicht analoge und digitale Signale, die über Telefonanschlüsse übermittelt werden, gleichzeitig bearbeiten. Dementsprechend kann über sie kein Internetzugang erfolgen. Die Verwendung eines einfachen Personal-Computers schränkt erheblich die Anwendungsbereiche einer solchen Nebenstellenanlagen ein.

Der Erfindung liegt die Aufgabe zugrunde, eine Nebenstellenanlage der Art in einem Rechner zu konzipieren, daß deren Inbetriebnahme und Verwaltung bedienerfreundlicher gestaltet ist, ohne Einschränkung sowohl der Anzahl der zu bedienenden Teilnehmerendgeräte der Telekommunikationsanlage, als auch der Leistung des Rechners.

Die Verwendung eines als Server dienenden Rechners ermöglicht vorteilhafterweise eine Nebenstellenanlage zu konzipieren, die für eine Telekommunikationsanlage einer ähnlichen Größe wie bei den üblichen nichtrechnergesteuerten Nebenstellenanlagen (Privat Automatic Branch Exchange - PABX) gedacht ist. Die Nebenstellenanlage besteht aus unterschiedlichen Telekommunikationskarten, die in dem Rechner integriert werden. Sie enthalten jeweils eine Schnittstelle, über die sie mit dem Betriebssystem des Rechners verbunden sind. Die einzelnen Telekommunikationskarten sind mit den unterschiedlichen Teilnehmerendgeräten der zu bedienenden Telekommunikationsanlage über einen Anschluß verbunden. Betriebssysteme wie Window NT oder UNIX, die die unterschiedlichen Anwendungen des Rechners verwalten, können auch gleichzeitig zu Steuerung der Nebenstellenanlage verwendet werden. Dadurch wird die Inbetriebnahme und Verwaltung der Nebenstellenanlage erheblich bedienerfreundlicher. Zudem ermöglicht dies unterschiedliche Anwendungen des Rechners mit denen der Nebenstellenanlage zu kombinieren. Falls der Rechner mit einem lokalen Netzwerk (Ethernet) verbunden ist, können Daten zwischen diesem Netzwerk und der Nebenstellenanlage ausgetauscht werden. Eine solche in dem Rechner integrierte Nebenstellenanlage ermöglicht es dasselbe Betriebssystem des Rechners zu verwenden, um sowohl digitale als auch analoge Signale, die z.B. über einen Internetzugang übermittelt werden, von der Nebenstellenanlage zu verwalten. Bei mehreren Karten, die jeweils analoge Signale bearbeiten, werden die Karte über ein zusätzliches Kabel miteinander verbunden, so daß die Karten gegenseitig analoge Signale austauschen können.

Eine nachträgliche Erweiterung der Nebenstellenanlage, um z.B. zusätzliche Teilnehmerendgeräte der Telekommunikationsanlage neu an die Nebenstellenanlage anzuschließen, bereitet keinen besonderen Aufwand. Betriebssysteme wie Window NT oder UNIX vereinfachen eine solche Erweiterung. Zudem kann von Vorteil sein, einige der Karten in einem Erweiterungsmodul einzubringen, das sich außerhalb des Rechners befindet und über eine Schnittstelle mit dem Rechner verbunden ist. Dies erlaubt es Nebenstellenanlagen in einen Rechner zu integrieren, selbst wenn letzter nicht hinreichend genügend Platz für die Karte zur Verfügung stellt. Damit können mehrere Nebenstellenanlagen zu einem einzigen zusammengeschlossen werden.

Vorteilhafte Ausgestaltungen der Erfindung ergeben sich aus den abhängigen Ansprüchen, der nachfolgenden Beschreibung und der Zeichnung.

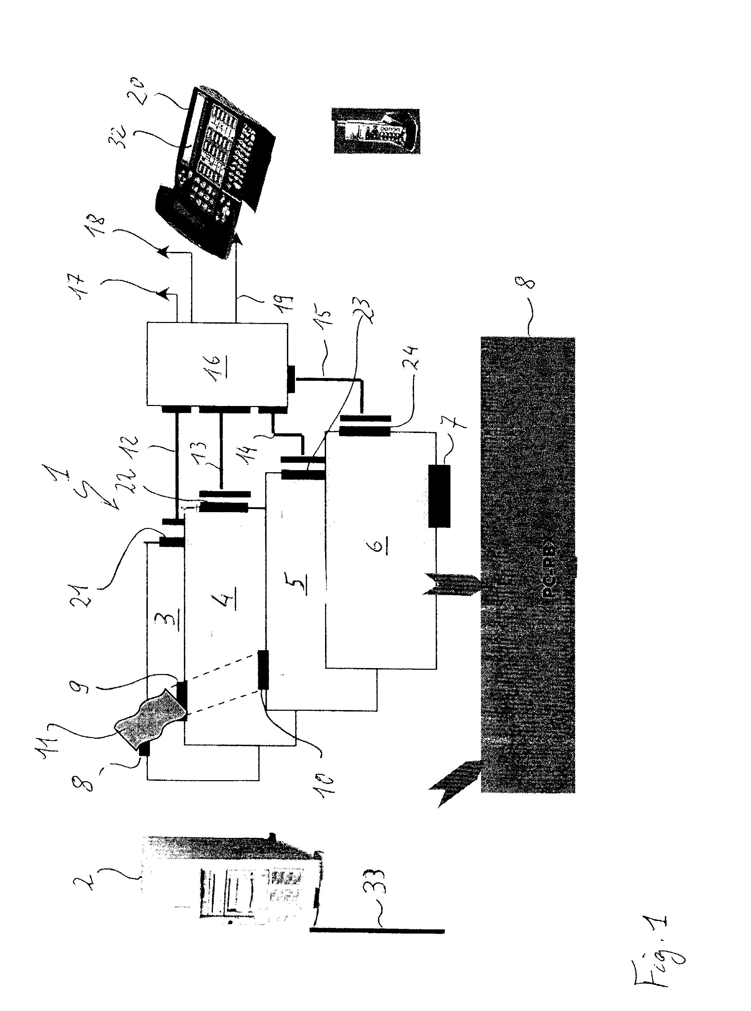

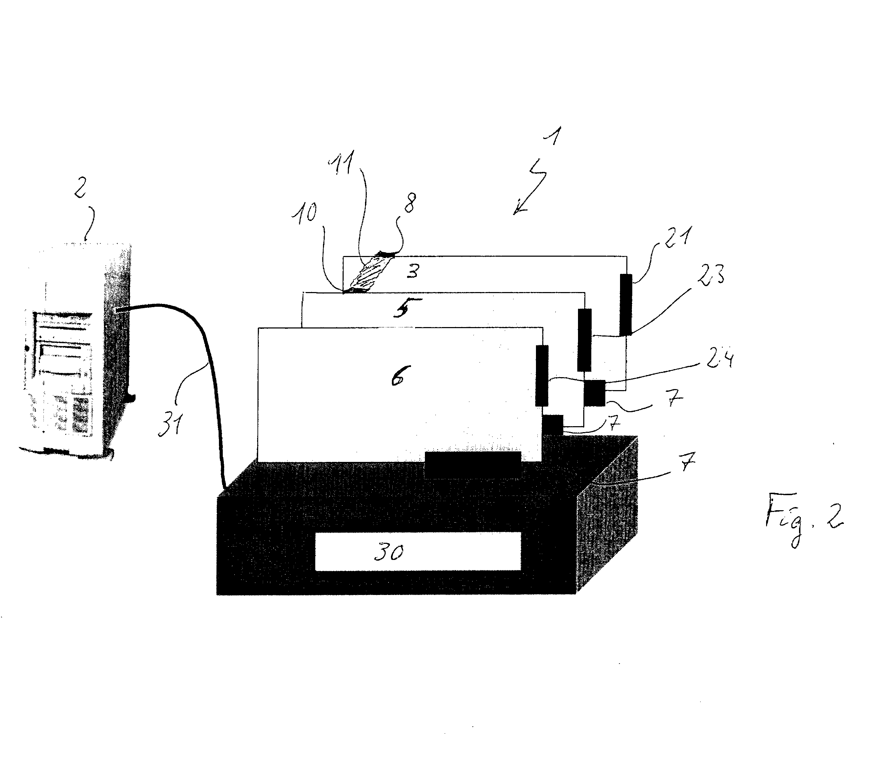

Ein Ausführungsbeispiel der Erfindung wird unter zur Hilfenahme der Fig. 1 und 2 erläutert. Es zeigen:
- Fig. 1: eine schematische Darstellung einer in einem Rechner integrierten Nebenstellenanlage,
- Fig. 2: eine schematische Darstellung eines externen Erweiterungsmoduls für die Nebenstellenanlage.

Die in der Fig. 1 schematisch dargestellte Nebenstellenanlage 1 ist in einem Rechner 2 integriert. Der Rechner 2 wird über ein Betriebssystem wie Window NT oder UNIX-artiges wie LINUX verwaltet. Er weist einen Zugang 33 zu einem lokalen Netzwerk (Ethernet), auf das mehrere Rechner, Drucker (Laser-Drucker) und/oder Faxgeräte miteinander verbindet. Der Rechner 2, der aus einem Personal-Computer besteht, der als eine Bedieneinheit (PC-Server) verwendet wird, enthält eine eigene Stromversorgung, ein Notlaufwerk zur regelmäßigen Absicherung (Backup) von neuerstellten Dateien auf einem z.B. magnetischen Band, und einem Modulator/Demodulator (Modem).

Die in dem Rechner 2 integrierte Nebenstellenanlage 1 enthält mehrere Karten 3 bis 6, die jeweils über eine digitale Schnittstelle 7 mit einer zentralen Verwaltungseinheit 8 des Rechners 2 verbunden sind. Die Karten 3 bis 5 bearbeiten analoge Signale und weisen deshalb jeweils eine zusätzliche Schnittstelle 8 bis 10 auf, die an ein Bandkabel 11 angeschlossen ist, über das die Karten 3 bis 5 gegenseitig analoge Signale austauschen können. Alle Karten 3 bis 6 weisen zudem jeweils eine Schnittstelle 21 bis 24 auf, an der zusätzliche Kabel 12 bis 15 angeschlossen sind, die mit einem zentralen Anschlußfeld 16 verbunden sind. Aus diesem Anschlußfeld 16 führt eine Leitung 17 zu dem zentralen Netzabschluß, eine oder mehrere Leitungen 18 zu Internet-Dienstleistunganbieter (Internet Service Provider) sowie zu Anschlüsse 19 von Teilnehmerendgeräten 20 einer zu bedienenden Telekommunikationsanlage.

Die Karte 3 stellt die Grundleistungen der Nebenstellenanlage bereit. Die gegebenenfalls mehreren Karten 4 sind zusätzlichen Erweiterungskarten, die zusätzliche Leistungen bereitstellen. Beispielweise wird eine Karte 4 eingebaut, wenn die Anzahl der zu bedienenden Teilnehmerendgeräte einen gewissen Wert überschreitet, und dann zusätzliche Grundleistungen erforderlich sind. Die Teilnehmerendgeräte 20 sind an diese Karten 3, 4 angeschlossen. Zusätzlich zu den Karten 3, 4 kann die Karte 5 analoge Signale bearbeiten. An dieser Karte 5 sind alternative Teilnehmerendgeräte wie Faxgeräte und/oder Internetzugänge 18 angeschlossen. Auf dieser Karte 5 werden typischerweise analoge Sprachsignale in digitale Signale und umgekehrt gemäß dem Internet Protokol umgewandelt (Voice over Internet Protokol). Die Karte 6 der Nebenstellenanlage 1 dient unter anderem dazu Datensignale gemäß dem Internet Protokol zu verarbeiten. Sie enthält eine Schnittstelle für digitale Teilnehmeranschlüsse, wie z.B. einen ISDN-Anschluß (Integrated Service Digital Network), ein öffentliches digitales Netz für den Transfer von Daten, Text, Sprache und Bild über eine einzelne Telefonleitung (Amtsleitung).

Die Fig. 2 zeigt ein Erweiterungsmodul 30, daß über eine elektrische Leitung 31 mit dem Rechner 2 verbunden ist. Dieses Erweiterungsmodul 30 ist als passives Chassis ausgebildet, auf das die Karten 3 bis 6 eingesteckt werden. Die elektrische Verbindung 31 zwischen dem Rechner 2 und dem Erweiterungsmodul 30 schließt die Karten 3 bis 6 über die jeweilige Schnittstelle 7 mit dem Rechner 2 an. Das Erweiterungsmodul 30 ermöglicht es, Karten 3 bis 6 der Nebenstellenanlage 1 am Rechner 2 extern anzuschließen; für den Fall z.B., daß im Rechner 2 kein physikalischer Platz für solche Karten mehr vorhanden ist. Das Erweiterungsmodul 30 kann auch als vorteilhafte Alternative betrachtet werden, um auf einfacher Weise Zusatzkarten nachträglich am Rechner anzuschließen. Dadurch ergibt sich auch, daß die Schnittstellen 21 bis 24 für die Anschlüsse 12 bis 15 der jeweiligen Karten 3 bis 6 sehr leicht zugänglich werden.

Das Erweiterungsmodul 30 enthält gegebenfalls, eine als Personal Computer Interface (PCI) oder als Asynchronous Transfer Modus (ATM) Schnittstelle zur Verbindung mit dem Rechner 2. Zusätzlich beinhaltet das Erweiterungsmodul 30 eine Steuereinheit (Controler). Sie wird über den Rechner 2 angesteuert, um wahlweise Zugriffe auf einzelne Karten 3 bis 6 zu ermöglichen.

Die Nebenstellenanlage 1 wird von dem Betriebssystem, das in dem Rechner 2 vorhanden ist, zentral verwaltet. Dies bedeutet, daß dasselbe Betriebssystem sowohl analoge Signale über die Karten 3 bis 5 als auch digitale Signale über die Karte 6 steuert. Dies ermöglicht ohne großen Aufwand, z.B. elektronische Briefmeldungen (e-mail), die von der Karte 6 bearbeitet werden, an einige Teilnehmerendgeräte 20 der Telekommunikationsanlage weiterzuleiten um sie auf einem Display 32 der Teilnehmerendgeräte 20 anzuzeigen. Es besteht auch die Möglichkeit elektronische Briefmeldungen durch die Karte 5 in Sprachsignale umzuwandeln, um diese an die Teilnehmerendgeräte 20 weiterzuleiten. Gleichwohl gibt es den umgekehrten Weg eines von einem Teilnehmer in einem Teilnehmerendgerät 20 aufgenommenen Sprachsignals über die Karte 5 in einen elektronischen Text umzuwandeln, und als Daten zur Verfügung zu stellen. Da der Rechner 2, der die Nebenstellenanlage 1 steuert, gegebenenfalls auch als Steuereinrichtung für ein lokales Netz 33 (Ethernet) dient, kann z.B. die in Daten umgewandelte Sprachmeldung an andere an dem lokalen Netz angeschlossenen Rechner weitergeleitet werden. Zu dem kann die Nebenstellenanlage 1 über das lokale Netz 3 von einem dritten an dieses Netz angeschlossenen Rechner gesteuert werden.

Die Ansteuerung der Nebenstellenanlage über gängige Betriebssysteme wie Windows NT oder UNIX ermöglicht es, daß die Inbetriebnahme der Nebenstellenanlage und deren Verwaltung nicht nur von einem Fachmann, sondern auch von jedem, der mit solchen Betriebssystemen umgehen kann, durchgeführt werden kann. Somit ist auch eine spätere Erweiterung der Nebenstellenanlage 1 leicht durchzuführen. Die erfindungsgemäße Nebenstellenanlage 1 bildet eine besonders günstige Eingliederung der üblichen Anwendungen einer Nebenstellenanlage (PABX) mit den Leistungen eines als Server dienenden Rechners (z.B. Personal-Computer) für eine leicht erweiterbare Plattform für integrierte Computer-Telekommunikation (Computer Telephony Integration-CTI) und Datenanwendungen.

## Patentansprüche

1. Nebenstellenanlage in einem Rechner integriert, wobei die Nebenstellenanlage mindestens aus einer zur Bearbeitung von Telekommunikationsanwendungen ausgerichtete Karte, die Sprach- und Datensignale verarbeitet, eine digitale Schnittstelle zu einer zentralen Verwaltungseinheit des Rechners und Ausgänge zu den Teilnehmerendgeräte einer zu bedienenden Telekommunikationsanlage beinhaltet.

2. Nebenstellenanlage nach Anspruch 1, dadurch gekennzeichnet, daß der Rechner eine Karte zur Bereitstellung eines Internetzugangs enthält.

3. Nebenstellenanlage nach Anspruch 2, dadurch gekennzeichnet, daß die Karte geeignet ist, analoge Sprachsignale in digitale Signale gemäß dem Internetprotokoll umzuwandeln.

4. Nebenstellenanlage nach Anspruch 2, dadurch gekennzeichnet, daß die Karte geeignet ist, Datensignale in digitale Signale gemäß dem Internetprotokoll umzuwandeln.

5. Nebenstellenanlage nach Anspruch 3 oder 4, dadurch gekennzeichnet, daß die zentrale Verwaltungseinheit geeignet ist die Steuerung der Karte zu übernehmen.

6. Nebenstellenanlage nach Anspruch 1, dadurch gekennzeichnet, daß bei mindestens zwei im Rechner vorhandenen Karten, die jeweils analoge Signale bearbeiten, jeweils eine zusätzliche Schnittstelle vorhanden ist, über die die Karten gegenseitig analoge Signale austauschen können.

7. Nebenstellenanlage nach Anspruch 1, dadurch gekennzeichnet, daß der Rechner (2) eine Schnittstelle (33) zu einem localen Netz aufweist.

8. Nebenstellenanlage nach Anspruch 1, dadurch gekennzeichnet, daß der Rechner eine Stromversorgung enthält, mit der alle Teilnehmerendgeräte der Telekommunikationsanlage direkt über deren Anschluß zur Nebenstellenanlage versorgt werden.

9. Erweiterungsmodul mit mindestens zwei Steckplätzen für Karten, wobei das Erweiterungsmodul eine Schnittstelle zum Rechner aufweist, die mit den Steckplätzen derart verbunden ist, daß eine Kommunikation zwischen den Karten und dem Rechner erfolgen kann.

10. Erweiterungsmodul nach Anspruch 8, dadurch gekennzeichnet ist, daß es über eine separate Stromversorgung gespeist wird.
